# EUROPÄISCHE PATENTSCHRIFT

(11) **EP 3 274 243 B1**
(45) Veröffentlichungstag und Bekanntmachung des Hinweises auf die Patenterteilung: **05.12.2018**
(21) Anmeldenummer: 16712026.0
(22) Anmeldetag: 23.03.2016
(51) Int. Cl.: B62D 7/14, B62D 13/04, B62D 13/06, B60G 9/00

(54) **ACHSEINHEIT**
AXLE UNIT
UNITÉ D'ESSIEU

(30) Priorität: 27.03.2015 DE 102015104782
(43) Veröffentlichungstag der Anmeldung: 31.01.2018
(73) Patentinhaber: SAF-HOLLAND GmbH, 63856 Bessenbach (DE)
(72) Erfinder: CHRIST, Armin, 63856 Bessenbach (DE)
(74) Vertreter: Müller Schupfner & Partner Patent- und Rechtsanwaltspartnerschaft mbB
(86) Internationale Anmeldenummer: PCT/EP2016/056461
(87) Internationale Veröffentlichungsnummer: WO 2016/156169

(56) Entgegenhaltungen:
- EP-A1- 1 527 982
- DE-A1-102012 025 604
- FR-A1- 2 335 359
- FR-A1- 2 894 553
- US-A1- 2009 199 603

## Beschreibung

Die vorliegende Erfindung betrifft eine Achseinheit zum Einsatz in Nutzfahrzeugen, insbesondere von Nutzfahrzeugen mit einem Hydraulik- oder Druckluftsystem.

Achseinheiten zum Einsatz in Nutzfahrzeugen sind aus dem Stand der Technik hinlänglich bekannt, insbesondere in gezogenen Nutzfahrzeugen oder in mehrachsigen Nutzfahrzeugen hat es sich dabei als vorteilhaft erwiesen, zumindest eine der Achsen als gelenkte Achse auszuführen. Eine Möglichkeit, eine derart gelenkte Achse auszuführen, ist die Ausbildung der Achse und der Radaufhängung als Nachlauflenkachse, wobei der Drehpunkt eines Schenkels, an welchem ein Fahrzeugrad drehbar gelagert ist, vorzugsweise in Fahrtrichtung vor der Rotationsachse des Fahrzeugrades angeordnet ist. Derartig ausgestaltete Lenkachsen können dabei aktiv gelenkt oder passiv gelenkt sein, wobei in beiden Fällen insbesondere bei einer Rückwärtsfahrt des Nutzfahrzeuges Lenkbewegungen oder Lenkausschläge der Schenkel verhindert werden müssen. Zu diesem Zweck haben sich im Stand der Technik sogenannte Rückfahrsperren durchgesetzt, welche jedoch oft einen hohen Bauraumbedarf aufweisen und durch die erforderliche massive Konstruktion ein hohes Gewicht verursachen. Weiterhin hat es sich gezeigt, dass die zusätzlich und im Bereich rund um das Achsrohr angeordneten Rückstell- oder Blockadesysteme insbesondere gegenüber aufgewirbelten Fremdkörpern während der Fahrt des Nutzfahrzeuges anfällig sind.

Die EP 1 527 982 A1 offenbart eine gesteuerte lenkbare Achse für einen Anhänger eines landwirtschaftlichen Fahrzeugs oder Industriefahrzeugs.

Die US 2009/199603 A1 befasst sich mit selbst steuernden Radfahrzeugen.

Die DE 10 2012 025 604 A1 betrifft ein Rückstellteil insbesondere für Nutzfahrzeuge.

Die FR 2 335 359 A1 befasst sich mit einer lenkbaren Achse.

Die FR 2 894 553 betrifft ein Fahrwerk für einen Anhänger.

Aufgabe der vorliegenden Erfindung ist es, eine Achseinheit bereitzustellen, welche eine zuverlässige Rückstellung und Rückfahrsperre für die Schenkel einer gelenkten Achse eines Nutzfahrzeuges ermöglicht und weiterhin einen nur geringen Bauraumbedarf aufweist und insbesondere zur Gewichtsreduzierung im Bereich des Fahrwerks eines Nutzfahrzeuges beiträgt.

Diese Aufgabe wird gelöst mit einer Achseinheit gemäß Anspruch 1. Weitere Vorteile und Merkmale der vorliegenden Erfindung ergeben sich aus den abhängigen Ansprüchen.

Erfindungsgemäß umfasst die Achseinheit ein Achsrohr und eine Betätigungseinheit, wobei das Achsrohr eine Aufnahmeöffnung aufweist, wobei die Betätigungseinheit einen Zylinder, eine Kolbenstange und einen Kolben aufweist, wobei der Kolben eine Kammer in der Betätigungseinheit in einen ersten Kammerbereich und einen zweiten Kammerbereich teilt, wobei die Kolbenstange mit dem Kolben in Eingriff steht und derart ausgelegt ist, dass sie mit einem Schenkel der Achseinheit in Eingriff bringbar ist, um eine Stellkraft auf den Schenkel zu übertragen, wobei die Betätigungseinheit in der Aufnahmeöffnung des Achsrohrs angeordnet und gegen Verlagerung quer zu einer Rohrachse und zumindest in einer Richtung parallel zur oder längs der Rohrachse gesichert ist. Das Achsrohr ist vorzugsweise die starre Achse eines Nutzfahrzeuges, welche üblicherweise als hohlkörperförmiger und sich zylinderförmig erstreckender Körper ausgebildet ist. In ihren jeweiligen distalen Endbereichen weist das Achsrohr einen Befestigungsbereich zur schwenkbaren Festlegung eines Schenkels auf, wobei der Schwenkpunkt des Schenkels vorzugsweise von der Rohrachse, der Haupterstreckungsrichtung des Achsrohres, beabstandet ist. Weiterhin weist das Achsrohr zumindest an einem seiner distalen Enden eine Aufnahmeöffnung auf. Die Aufnahmeöffnung des Achsrohres erstreckt sich bevorzugt rotationssymmetrisch um die Rohrachse. In diese Aufnahmeöffnung ist vorzugsweise eine Betätigungseinheit einführbar und vorzugsweise an dem Achsrohr festlegbar. Zu diesem Zweck kann die Aufnahmeöffnung des Achsrohres ein Innengewinde aufweisen, welches mit einem bereichsweise an der Außenseite der Betätigungseinheit vorgesehenen Außengewinde in Eingriff bringbar ist. Besonders bevorzugt ist die Betätigungseinheit dabei im Achsrohr derart festgelegt, dass eine Verlagerung der Betätigungseinheit sowohl quer, als auch längs der Rohrachse verhindert ist. In einer besonders einfachen Ausführungsform kann die Betätigungseinheit somit in das Achsrohr eingeschraubt sein. Bevorzugt kann der Zylinder der Betätigungseinheit auch durch das Achsrohr selbst gebildet sein. Somit kann der Zylinder der Betätigungseinheit einstückig mit dem Achsrohr ausgebildet sein. Die Betätigungseinheit weist einen Kolben und eine Kolbenstange auf, wobei der Kolben an der Kolbenstange derart festgelegt ist, dass eine Verlagerung des Kolbens längs der Rohrachse auch eine Verlagerung der Kolbenstange längs der Rohrachse verursacht. Die Kolbenstange weist an ihrem dem Kolben abgewandten distalen Ende einen Kraftübertragungsabschnitt auf, mittels welchem eine Kraft oder Stellkraft auf den Schenkel übertragbar ist. Der Kraftübertragungsabschnitt der Kolbenstange weist bevorzugt eine gerundete Geometrie oder beispielsweise einen Wälzkörper auf, welcher eventuelles Auftreten von Gleitreibung und Oberflächenverschleiß beim Kontakt zwischen dem Kraftübertragungsabschnitt der Kolbenstange und dem Schenkel reduziert. Die Besonderheit der vorliegenden Erfindung ist dabei, dass die Betätigungseinheit innerhalb des Achsrohres angeordnet ist und somit gegen Umwelteinflüsse, wie beispielsweise während der Fahrt aufgewirbelte Körper und Flüssigkeiten, weitestgehend geschützt ist. Zudem kann die Betätigungseinheit derart klein dimensioniert werden, dass sie auch in bestehende Achseinheiten einbringbar ist, wobei der Außendurchmesser der Betätigungseinheit vorzugsweise nur geringfügig kleiner sein muss als der Innendurchmesser eines Achsrohres. Besonders bevorzugt weist die Betätigungseinheit, insbesondere bevorzugt der Zylinder der Betätigungseinheit, einen Kragen auf, welcher an der Außenseite der Aufnahmeöffnung des Achsrohres anschlägt und somit die Betätigungseinheit gegen Verlagerung relativ zum Achsrohr in Richtung der Mitte des Achsrohres sichert. Die Kraft, welche die Betätigungseinheit, insbesondere die Kolbenstange, an den Schenkel überträgt, ist vorzugsweise eine Kraft, die den Schenkel in eine Geradeausfahrstellung des Nutzfahrzeuges bringt. Diese Geradeausfahrstellung ist dadurch gekennzeichnet, dass die Rotationsachsen der Räder des Nutzfahrzeuges parallel zur Rohrachse und insbesondere bevorzugt senkrecht oder orthogonal zur Fahrzeuglängsrichtung bzw. Fahrtrichtung stehen. Die Betätigungseinheit ist somit eine Rückstelleinheit, welche geeignet ist, die Schenkel mit den daran angeordneten Fahrzeugrädern aus einer ausgelenkten Stellung um die Schwenkachse des jeweiligen Schenkels zu schwenken und in eine Geradeausfahrstellung zu bringen.

In einer bevorzugten Ausführungsform weist die Betätigungseinheit einen Anschlussabschnitt zum Anschluss einer Fluidleitung auf, wobei im Betrieb der Betättigungseinheit ein unter Druck stehendes Fluid in einen der Kammerbereiche (erster oder zweiter Kammerbereich) einleitbar ist. Der Anschlussabschnitt ist vorzugsweise mit einem Gewinde oder einem Bajonettverschluss oder einer ähnlichen Festlegungsmöglichkeit für eine Leitung ausgestattet. Diese Leitung ist vorzugsweise mit dem Hydrauliksystem oder mit dem Druckluftsystem des Nutzfahrzeuges verbunden. In einem ersten bevorzugten Fall, bei welchem ein unter Druck stehendes Fluid in den Kammerbereich eingeleitet werden soll, welcher sich benachbart zur Wand des Zylinders befindet, in welcher der Anschlussabschnitt vorgesehen ist, ist der Anschlussabschnitt lediglich eine Bohrung mit entsprechenden Dichtmitteln (bspw. Dichtring) zum Anschluss einer Fluidleitung. Im zweiten ebenfalls bevorzugten Fall, dass der Kammerbereich, in welchen das unter Druck stehende Fluid eingeleitet werden soll, der Richtung der Achsmitte zugewandte Kammerbereich ist, ist beispielsweise in der Wand des Zylinders der Betätigungseinheit ein entsprechendes Leitungssystem vorgesehen, über welches ein unter Druck stehendes Fluid in den entsprechenden Kammerbereich einleitbar und aus diesem wieder herausleitbar ist. Alternativ bevorzugt kann auch das Achsrohr eine Bohrung aufweisen, durch welche ein in die Wand des Zylinders der Betätigungseinheit eingebrachter Anschlussabschnitt erreichbar ist. Der Nachteil daran, eine Aussparung in das Achsrohr einzubringen, ist, dass die Festigkeit des Achsrohres in diesem Bereich geschwächt wird. Sofern das Achsrohr eine ausreichend hohe Festigkeit aufweist, ist jedoch mit Hilfe einer in das Achsrohr eingebrachten Bohrung oder Öffnung eine besonders einfache und leichte Konstruktion der Betätigungseinheit möglich, da lediglich von der Seite durch die Wand der Betätigungseinheit bzw. des Zylinders der Betätigungseinheit ein Anschlussabschnitt eingebracht werden muss.

Bevorzugt ist der Schenkel schwenkbar um eine Schwenkachse am Achsrohr gelagert, wobei die Schwenkachse von der Rohrachse beabstandet ist und quer zur Rohrachse steht, wobei der Schenkel in einer ersten Schwenkrichtung auf die Kolbenstange zuschwenkbar ist und in einer zweiten Schwenkrichtung von der Kolbenstange wegschwenkbar ist, wobei die Kolbenstange ausgelegt ist, zumindest in der ersten Schwenkrichtung einen Anschlag für den Schenkel zu bilden. Die schwenkbare Lagerung des Schenkels am Achsrohr findet vorzugsweise über einen Lenkzapfen statt. Dabei ist die Schwenkachse des Schenkels vorzugsweise senkrecht zu einer Horizontalen des Nutzfahrzeuges angeordnet. Vorzugsweise ist die Kolbenstange nicht form- oder kraftschlüssig am Schenkel festgelegt, sondern lediglich dazu geeignet, ab einer bestimmten ausgefahrenen Position eine Kraft auf den Schenkel zu übertragen. Auf diese Weise ist der Schenkel, während die Kolbenstange vollständig in die Betätigungseinheit bzw. den Zylinder der Betätigungseinheit eingefahren ist, frei und unabhängig von der Kolbenstange schwenkbar. Erst bei Aktivierung der Betätigungseinheit und dem Ausfahren der Kolbenstange überträgt diese vorzugsweise eine nur in eine Richtung wirkende Kraft an den Schenkel, um diesen vorzugsweise in eine Geradeausfahrstellung zu bringen. In einer alternativen Ausführungsform kann die Kolbenstange auch über ein Gelenkelement an dem Schenkel festgelegt sein. Hierbei lassen sich insbesondere bevorzugt Kräfte in zwei Richtungen längs der Rohrachse zwischen Schenkel und Kolbenstange übertragen. Der Nachteil dieser Ausführungsform ist, dass aufgrund der Schwenkbewegung des Schenkels ein Gelenkelement erforderlich ist, welches zusätzliches Gewicht verursacht und ggf. recht aufwendig ist. Insbesondere bevorzugt ist die Betätigungseinheit nur dafür ausgelegt, bei Ausfall eines Hydraulik- oder Druckluftsystems des Nutzfahrzeuges oder bei Rückwärtsfahrt, die Geradeausfahrstellung der Räder des Nutzfahrzeuges zu gewährleisten. Zu diesem Zweck und insbesondere um zusätzliches Gewicht einzusparen, ist die Betätigungseinheit sehr kompakt und mit möglichst wenigen zueinander beweglichen Teilen ausgestattet. In diesem Sinne ist es bevorzugt, dass die Betätigungseinheit über die Kolbenstange lediglich in einer Richtung eine Kraft an den Schenkel überträgt.

Vorzugsweise weist der Schenkel eine Radachse auf, um welche drehbar ein Rad des Nutzfahrzeuges an dem Schenkel festlegbar ist, wobei in einer Geradeausfahrstellung des Schenkels die Radachse parallel zur Rohrachse ausgerichtet ist. Besonders bevorzugt weist der Schenkel einen Achsstummel herkömmlicher Bauweise auf, an welchem eine Lageranordnung von vorzugsweise Wälzlagern sowie die entsprechenden Befestigungsmuttern zur Verspannung der Lageranordnung vorgesehen sind. Die Rotationsachse des an der Lageranordnung drehbar zu lagernden Fahrzeugrades ist dabei als Radachse des Schenkels definiert.

In einer ferner bevorzugten Ausführungsform ist am Achsrohr, dem ersten Schenkel gegenüberliegend, ein zweiter Schenkel schwenkbar um eine zweite Schwenkachse festgelegt, wobei der erste Schenkel und der zweite Schenkel durch ein Übertragungselement miteinander verbunden sind, wobei das Übertragungselement eine Schwenkbewegung des ersten oder des zweiten Schenkels an den jeweils anderen Schenkel überträgt. Analog zum ersten Schenkel ist auch der zweite Schenkel um eine Schwenkachse, im vorliegenden Fall die zweite Schwenkachse, schwenkbar am Achsrohr festgelegt. Das Übertragungselement ist mit anderen Worten vorzugsweise eine Spurstange. Weiterhin bevorzugt kann das Übertragungselement auch Teil eines Lenkzylinders und den entsprechenden vorzugsweise mit Gelenken ausgestatteten Lenkstangen sein. Wesentliche Aufgabe des Übertragungselements ist es, eine Schwenkbewegung eines der Schenkel an den jeweils anderen Schenkel zu übertragen. Auf diese Weise kann, wenn die Betätigungseinheit einen der Schenkel nur in einer Richtung mit einer Kraft beaufschlagen kann, diese Schwenkbewegung des Schenkels über das Übertragungselement an den jeweils anderen Schenkel übertragen werden, so dass in einem Gleichgewichtszustand, wenn beide Betätigungseinheiten vollständig ausgefahren sind, beide Schenkel in Geradeausfahrstellung gebracht sind. Insbesondere bevorzugt weisen die Schenkel jeweils ihrem Schwenklager an der ersten bzw. zweiten Schwenkachse gegenüberliegend ein entsprechendes Lager zur Festlegung an dem Übertragungselement auf. Es versteht sich, dass auch das Übertragungselement schwenkbar zu den Schenkeln an diesen festgelegt ist. Aus dem Stand der Technik sind entsprechende Lenkzapfen bzw. Lenkhebel bekannt, welche mit einem bestimmten Winkel zur Radachse des Schenkels ausgerichtet sind und somit einen geringfügigen Spurunterschied zwischen dem rechten und dem linken Rad bei Kurvenfahrt erreichen. Auf diese Weise kann das Fahrverhalten des Nutzfahrzeuges auch an der nachgelenkten Achse mit Vorteil leicht untersteuernd ausgelegt sein, um insbesondere den Reifenverschleiß zu reduzieren.

Besonders bevorzugt ist eine zweie Betätigungseinheit in einer zweiten Aufnahmeöffnung des Achsrohres festlegbar, wobei die zweite Betätigungseinheit ausgelegt ist, den zweiten Schenkel mit einer Kraft längs der Rohrachse zu beaufschlagen, welche entgegengesetzt zur Kraft ist, mit welcher die erste Betätigungseinheit den ersten Schenkel beaufschlagt. Die beiden Betätigungseinheiten sind somit vorzugsweise spiegelsymmetrisch zu einer Ebene, welche orthogonal zur Rohrachse und in der Achsmitte verläuft oder koaxial zur Rohrachse, zueinander ausgerichtet. Dabei ist jede der Betätigungseinheiten vorzugsweise ausgelegt nur in einer Richtung, eine Kraft auf den jeweils schwenkbar an dem Achsrohr festgelegten Schenkel auszuüben. Gemeinsam mit der Verbindung der beiden Schenkel über das Übertragungselement ist es somit möglich, durch gezielte Ansteuerung der Betätigungseinheiten eine bestimmte Stellung beider Schenkel bezogen auf die Rohrachse zu erreichen. Der Vorteil dieser Ausführungsform ist, dass die beiden Betätigungseinheiten sehr einfach ausgelegt sein können, da sie jeweils nur zur Aufbringung einer Kraft in einer Richtung ausgelegt sind. Die Spurstange kann dabei besonders einfach und insbesondere bevorzugt wesentlich leichter als die bisher aus dem Stand der Technik bekannten doppelt wirkenden Zylinder, welche bei bisher im Stand der Technik bekannten Lösungen die Sicherung sowie die Lenkbetätigung von Nachlaufachsen übernahmen.

In bevorzugter Weise ragen in einem Fehlerzustand oder bei Rückwärtsfahrt des Nutzfahrzeuges die Kolbenstangen der Betätigungseinheit mit einer Blockierlänge aus den Zylindern der Betätigungseinheiten heraus, wobei die Schenkel durch die Kolbenstangen und das Übertragungselement in der Geradeausfahrstellung gehalten sind. Insbesondere wenn die Hydraulik des Nutzfahrzeuges oder der ansonsten für die Einstellung der Geradeausfahrt bei einer Rückwärtsfahrt des Nutzfahrzeuges zuständige Hauptlenkzylinder ausfällt, ist die Hauptaufgabe der Betätigungseinheiten, die Geradeausfahrstellung der Schenkel der Achseinheit zu sichern, oder bevorzugt herzustellen. Zu diesem Zweck sind die Betätigungseinheiten dafür ausgelegt, die Kolbenstangen in eine bestimmte ausgefahrene Stellung zu bringen, bei welcher diese mit einer Blockierlänge aus den Zylindern der Betätigungseinheiten herausragen und somit in einem bestimmten Abstand zum Ende des Achsrohres eine Kraft auf einen Schenkel zu übertragen oder für diesen Schenkel als Anschlag zu dienen. Im Rahmen der vorliegenden Erfindung ist es besonders bevorzugt, dass dieser Zustand der Betätigungseinheiten nur dann eingestellt wird, wenn ein Fehler in der sonstigen Lenkanordnung des Nutzfahrzeuges auftritt oder wenn unabhängig von einem Fehler für eine Rückwärtsfahrt des Nutzfahrzeuges die Geradeausfahrstellung der Schenkel und somit der Fahrzeugräder eingestellt werden soll.

In einer besonders bevorzugten Ausführungsform ist die Blockierlänge gleich der maximal ausgefahrenen Länge der Kolbenstangen. In einer weiteren bevorzugten Ausführungsform, nämlich dann, wenn die Kolbenstange ausgelegt ist in zwei Richtungen längs der Rohrachse eine Kraft auf den jeweiligen Schenkel zu übertragen, ist die Blockierlänge vorzugsweise die Hälfte der maximal ausgefahrenen Länge der Kolbenstange. In diesem Fall ist die Kolbenstange insbesondere dafür ausgelegt, in beide Schwenkrichtungen der Schenkel an diesen festgelegt zu bleiben und insbesondere bevorzugt den Schenkel aus den beiden maximalen Verschenkungspositionen zurück in die Geradeausfahrstellung zu drücken oder zu ziehen. Bei dieser bevorzugten Ausführungsform ist es möglich, nur eine Betätigungseinheit am Achsrohr anzuordnen, wobei der jeweils andere Schenkel allein über das Übertragungselement in die entsprechend von der Betätigungseinheit vorgesehene Schwenkposition bringbar ist.

In einer ersten bevorzugten Ausführungsform ist der erste Kammerbereich auf der der Kolbenstange abgewandten Seite des Kolbens angeordnet, wobei ein Einleiten von unter Druck stehendem Fluid in den ersten Kammerbereich eine Verlagerung des Kolbens und der Kolbenstange entlang der Rohrachse bewirkt der Art, dass die Kolbenstange in Eingriff mit dem Schenkel gelangt und eine Stellkraft auf den Schenkel überträgt. Bei dieser bevorzugten Ausführungsform wird die Verlagerung des Kolbens und der Kolbenstange somit durch das Einleiten von unter Druck stehendem Fluid in den ersten Kammerbereich verursacht bzw. eingeleitet. Für das Funktionieren dieser Ausführungsform ist es somit erforderlich, dass eines der Druckluft- oder Hydrauliksysteme des Nutzfahrzeuges weiterhin intakt ist und eine ausreichende Fluidmenge mit ausreichendem Druck in die Betätigungseinheit leiten kann. Der Vorteil dieser Ausführungsform ist, dass durch den Einsatz von Druckluft oder Hydraulik-Fluid relativ hohe Kräfte an dem Kolben und der Kolbenstange erzeugt werden können, so dass auch im Stand des Nutzfahrzeuges eine Rückstellung der Schenkel und der damit verbundenen Räder aus einer ausgelenkten Position in die Geradeausfahrstellung möglich ist. Insbesondere ist die durch den Einsatz von Hydraulikflüssigkeit und Druckluft erzeugbare Kraft höher als eine beispielsweise durch ein elastisch verformbares Rückstellelement erzeugte Kraft. Bei heutigen Nutzfahrzeugen steht üblicherweise neben dem Hauptdruckluft- oder Hydraulikkreislauf jeweils noch ein zweiter Hydraulik- oder Luftdruckkreislauf zur Verfügung, welcher als Rückfallposition genutzt werden kann. Somit ist diese Ausführungsform insbesondere für Nutzfahrzeuge geeignet, bei welchen eine Redundanz des Hydrauliksystems oder des Druckluftsystems ohnehin vorhanden ist. Weiterhin bevorzugt können entsprechende Ventilschaltungen vorgesehen sein, über welche nach Einleiten des unter Druck stehenden Fluides in den ersten Kammerbereich ein Wiederherausfließen des Fluides aus diesem ersten Kammerbereich mittels eines Rückschlagventils verhindert werden kann. Es kann auf diese Weise auch wenn der Druck im sekundären Druckluft- oder Hydrauliksystem absinkt, die Geradeausfahrstellung der Schenkel über einen langen Zeitraum gewährleistet werden.

Weiterhin bevorzugt kann bei der zuvor beschriebenen Ausführungsform das unter Druck stehende Fluid in einem Vorratsbehälter bevorratet werden, welcher auch bei Ausfall des gesamten Hydraulik- oder Druckluftsystems des Nutzfahrzeuges ausreichend Fluid und Druck bereitstellt, um die Kolbenstange bzw. die Kolbenstangen der Betätigungseinheit bzw. Betätigungseinheiten derart zu verschieben, dass sie mit einer Blockierlänge aus dem Zylinder bzw. den Zylindern herausragt bzw. herausragen. Für diese Ausführungsform kann das unter Druck stehende Fluid ein Hydraulik-Fluid oder vorzugsweise auch Druckluft sein. In beiden Fällen ist der Vorratsbehälter dafür ausgelegt, einen bestimmten Druck aus dem Haupt-Hydraulik- oder Druckluftsystem des Nutzfahrzeuges zu speichern und bei einem Ausfall der Hydraulik oder des Druckluftsystems noch eine bestimmte, jeweils für die Betätigungseinheiten ausreichende Menge von unter Druck stehendem Fluid abzugeben, um dieses in die Betätigungseinheit bzw. die Betätigungseinheiten zu leiten. Der Vorratsbehälter wird dabei im Normalbetrieb des Nutzfahrzeuges vorzugsweise von der Hydraulik bzw. dem Druckluftsystem des Nutzfahrzeuges gespeist, wobei über ein Rückschlagventil verhindert wird, dass bei Ausfall der Hydraulik oder des Druckluftsystems des Nutzfahrzeuges das unter Druck stehende Fluid ohne weiteres aus dem Vorratsbehälter herausströmt. Weiterhin ist zwischen dem Vorratsbehälter und der Betätigungseinheit bevorzugt ebenfalls ein Rückschlagventil vorgesehen, welches verhindert, dass das unter Druck stehende Fluid aus der Betätigungseinheit ohne weiteres in den Vorratsbehälter zurückfließen kann, wenn dessen Druck weiter absinkt. In diesem Zusammenhang hat es sich bewährt, elektronisch geschaltete Ventile einzurichten, über welche der Fluidaustausch zwischen der Betätigungseinheit und dem Hydraulik- oder Druckluftsystem des Nutzfahrzeuges gesteuert werden kann.

In einer alternativen Ausführungsform ist der erste Kammerbereich auf der der Kolbenstange abgewandten Seite des Kolbens angeordnet, wobei ein Rückstellmittel im ersten Kammerbereich angeordnet und von dem Kolben unter Vorspannung gehalten ist, wobei in einem Normalbetrieb der Betätigungseinheit das Hydraulik- oder Druckluftsystem des Nutzfahrzeuges unter Druck stehendes Fluid im zweiten Kammerbereich bereitstellt, welches den Kolben gegen das Rückstellmittel zwingt, wobei bei Druckabfall in dem zweiten Kammerbereich das Rückstellmittel den Kolben mit der Kolbenstange gegen den Schenkel presst. Diese Ausführungsform ist insbesondere für Fälle geeignet, bei denen das gesamte Hydraulik- oder Luftdrucksystem des Nutzfahrzeuges ausfällt und kein Speicher für unter Druck stehendes Fluid vorhanden ist. Ein einfaches Rückstellmittel, welches den Kolben mit einer Kraft beaufschlagt, ist somit als besonders gute Alternative zur Herstellung der Geradeausfahrposition der Schenkel bei Ausfall des Druckluft- oder Hydrauliksystems des Nutzfahrzeuges anzusehen. Insbesondere bevorzugt kann ein Rückstellmittel auch in der zuvor beschriebenen Ausführungsform mit unter Druck stehendem Fluid zusätzlich zu dem in dem ersten Kammerbereich bereitgestellten unter Druck stehenden Fluid vorgesehen sein, um eine zusätzliche Sicherheitsinstanz bei einen Ausfall der Hydraulik bzw. des Druckluftsystems des Nutzfahrzeuges zu schaffen.

Besonders bevorzugt umfasst das Rückstellmittel ein metallisches Federelement. Hierbei ist vorzugsweise eine Spiralfeder in dem ersten Kammerbereich angeordnet, da diese besonders einfach herzustellen ist und ein relativ geringes Gewicht, angesichts der von ihr aufbringbaren Rückstellkraft, aufweist. Alternativ bevorzugt kann eine Aneinanderreihung von Tellerfedern in dem ersten Kammerbereich angeordnet sein. Tellerfedern zeichnen sich dadurch aus, dass sie eine besonders hohe Rückstellkraft erzeugen können, wobei durch Variierung der Anzahl von Tellerfedern diese Kraft auch über einen großen Federweg bereitgestellt werden kann. Nachteilig wirkt sich lediglich das höhere Gewicht von Tellerfedern im Vergleich zu einer Spiralfeder aus. Besonders bevorzugt können auch zwei parallel geschaltete Spiralfedern vorgesehen sein, wobei eine äußere mit einem größeren Durchmesser und eine innere mit einem kleineren Durchmesser besonders bevorzugt ist.

In einer weiteren bevorzugten Ausführungsform ist die Kolbenstange an dem Schenkel derart festgelegt, dass sie eine Kraft längs der Rohrachse in beide Richtungen auf den Schenkel übertragen kann. Diese Ausführungsform ist zwar vom Konstruktionsaufwand der Schnittstelle zwischen der Kolbenstange und dem Schenkel aufwendiger als die Ausführungsform, bei welcher die Kolbenstange den Schenkel lediglich in einer Richtung mit einer Kraft beaufschlagt. Vorteilhaft ist aber, dass die Kolbenstange auf diese Weise in der Lage ist, die Schenkel aus jeder beliebigen Auslenkung jeweils in die Geradeausfahrstellung zurückführen kann. Auf diese Weise ist es möglich, entweder auf das Übertragungselement oder auf eine zweite Betätigungseinheit an der jeweils gegenüberliegenden Seite des Achsrohres zu verzichten. Es kann somit Gewicht eingespart werden. Im Rahmen der vorliegenden Erfindung ist diese Ausführungsform jedoch nicht bevorzugt, wenn die Betätigungseinheiten als sehr einfache und leichte, jeweils nur in eine Richtung wirkende Systems ausgelegt werden, welche lediglich im Notfall oder im Falle eines Fehlers in der Lenksteuerung des Nutzfahrzeuges eingesetzt werden sollen. Nachteilig bei dieser Ausführungsform ist ebenfalls, dass die Betätigungseinheit und insbesondere die Kolbenstange der Betätigungseinheit sämtliche Lenkausschläge des Schenkels ebenfalls durchführt und somit ein höherer Verschleiß zu erwarten ist.

Ferner bevorzugt weist der Schenkel eine Einleitungsfläche auf, welche derart geformt ist, dass bei Krafteinleitung durch die Kolbenstange im Wesentlichen keine Kraftkomponenten quer zur Rohrachse auftreten. Mit anderen Worten ist die Einleitungsfläche des Schenkels derart ausgebildet, dass im Wesentlichen nur Kraftkomponenten, welche parallel zur Rohrachse verlaufen, im Kraftübertragungsbereich zwischen Kolbenstange und Schenkel wirken. Als "im Wesentlichen" wird in diesem Fall angenommen, dass zumindest 85 % der Kraftkomponenten längs oder parallel zur Rohrachse wirken. Es kann auf diese Weise eine Verbiegung der Kolbenstange vermieden werden und die Kolbenstange entsprechend dünner dimensioniert werden, da sie lediglich Zug- und Druckkräfte übertragen muss und nicht auch auf Biegung belastet wird. Darüber hinaus kann eine bessere Abdichtung der Kolbenstange gegenüber dem Zylinder und entsprechenden Gleitdichtungen am Zylinder der Betätigungseinheit verwirklicht werden, wenn die Kolbenstange nur unwesentlich quer zur Rohrachse ausgelenkt wird. Die Einleitungsfläche des Schenkels weist dabei vorzugsweise eine Krümmung auf, welche je nach Schenklage des Schenkels einen Schnittpunkt mit der Rohrachse aufweist, in welchem die Rohrachse im Wesentlichen senkrecht zur Einleitungsfläche steht bzw. in welchem die Rohrachse die Einleitungsfläche im Wesentlichen orthogonal schneidet.

Weiterhin bevorzugt ist die Erstreckung der Kolbenstange längst der Rohrachse einstellbar, wobei die Kolbenstange im vollständig in den Zylinder eingefahrenen Zustand eine Lenkausschlagbegrenzung für den Schenkel bildet. Neben der Hauptfunktion der Betätigungseinheiten bei Ausfall der Lenksteuerung des Nutzfahrzeuges, die Geradeausfahrstellung der Schenkel herzustellen, ist es weiterhin möglich, dass die Betätigungseinheit durch eine Einstellbarkeit der Erstreckung bzw. der Länge der Kolbenstange längs der Rohrachse als Anschlag für die Schenkel fungiert. Insbesondere bevorzugt kann die Kolbenstange hierfür teleskopartig ausgebildet sein, wobei ein Gewinde vorgesehen ist, über welches der drehbar zum Rest der Kolbenstange vorgesehene Teil in diesen ein- und ausgeschraubt werden kann und mit einer entsprechenden Kontermutter konterbar ist. Es ist somit auf einfache Weise möglich, den maximalen Lenkausschlag der Schenkel und somit auch der an diesen festgelegten Fahrzeugräder über die Kolbenstange einzustellen und zu verhindern, dass die Räder in Kontakt mit Teilen des Rahmens des Nutzfahrzeuges gelangen und Schaden nehmen oder Schaden anrichten.

Weitere Vorteile und Merkmale der vorliegenden Erfindung ergeben sich aus der nachfolgenden Beschreibung mit Bezug auf die beigefügten Figuren. Es versteht sich dabei, dass einzelne in ausgewählten Ausführungsformen dargestellte und beschriebene Merkmale auch in anderen Ausführungsformen Einsatz finden sollen, sofern dies nicht explizit ausgeschlossen ist oder sich aufgrund technischer Gegebenheiten verbietet. Es zeigen:
- Fig. 1: eine teilweise geschnittene Ansicht einer ersten bevorzugten Ausführungsform der erfindungsgemäßen Achseinheit,
- Fig. 2: eine Schnittansicht einer bevorzugten Ausführungsform einer erfindungsgemäßen Betätigungseinheit,
- Fig. 3: eine weitere teilweise geschnittene Ansicht einer bevorzugten Ausführungsform einer erfindungsgemäßen Betätigungseinheit,
- Fig. 4: eine weitere teilweise geschnittene Ansicht einer bevorzugten Ausführungsform einer erfindungsgemäßen Betätigungseinheit
- Fig. 5: eine Ansicht einer bevorzugten Ausführungsform der erfindungsgemäßen Achseinheit, und
- Fig. 6: eine weitere Ansicht einer bevorzugten Ausführungsform der erfindungsgemäßen Achseinheit.

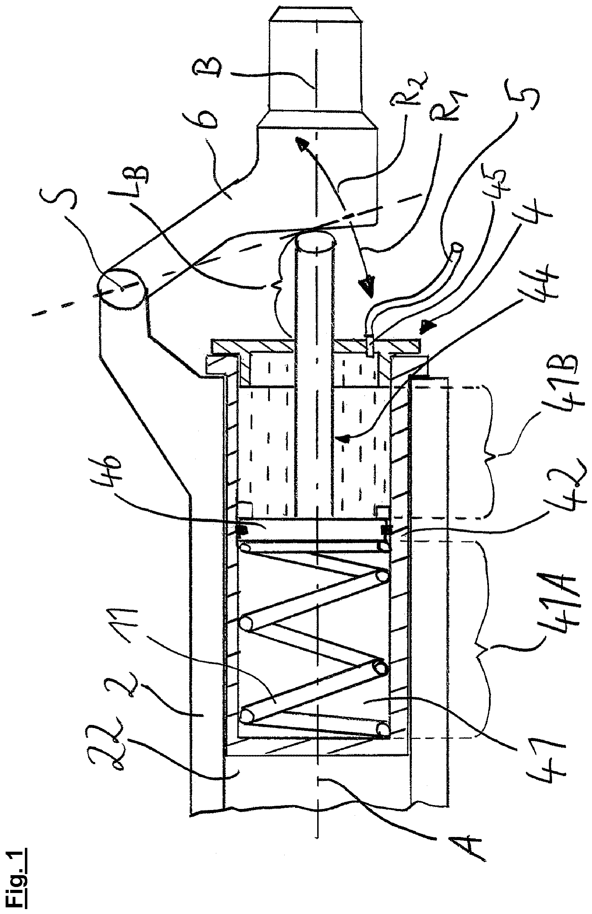

Die in Fig. 1 dargestellte Betätigungseinheit 4 ist in eine Aufnahmeöffnung 22 eines Achsrohres 2 eingesetzt und stützt sich über einen an der Außenseite des Achsrohres vorgesehenen Kragen an dem Achsrohr 2 ab. Dabei sind die Betätigungseinheit 4 und die Aufnahmeöffnung 22 des Achsrohres 2 vorzugsweise im Wesentlichen rotationssymmetrisch um eine Rohrachse A ausgebildet. Lediglich das in der Betätigungseinheit 4 vorgesehene Rückstellelement 11 und der im Deckel der Betätigungseinheit 4 vorgesehene Anschlussabschnitt 45 sind nicht rotationssymmetrisch, um die Rohrachse ausgebildet, sondern weichen von dieser Rotationssymmetrie ab. Die Betätigungseinheit 4 weist einen Kolben 46 auf, welcher die Kammer 41 der Betätigungseinheit 4 in einen ersten Kammerbereich 41A und einen zweiten Kammerbereich 41B unterteilt. Die Kammer 41 der Betätigungseinheit 4 ist vorzugsweise die im Wesentlichen zylindrische Aussparung im Inneren des Zylinders 42 der Betätigungseinheit 4. Dargestellt ist weiterhin, dass der Kolben 46 über Dichtelemente, wie beispielsweise umlaufende Dichtringe verfügt, welche eine Fluiddichtheit zwischen der dem ersten Kammerbereich 41A und dem zweiten Kammerbereich 41B sicherstellen. Am Kolben 46 festgelegt ist eine Kolbenstange 44, welche aus dem Zylinder 42 der Betätigungseinheit 4 herausragt und mit ihrem dem Kolben 46 abgewandten distalen Ende ausgelegt ist, eine Kraft auf einen Schenkel 6 der Achseinheit zu übertragen. Der Schenkel 6 ist schwenkbar um eine Schwenkachse S an einer entsprechenden Geometrie des Achsrohres 2 festgelegt. Die Kolbenstange 44 stellt dabei eine Begrenzung für eine Schwenkbewegung des Schenkels 6 um die Schwenkachse S entlang einer ersten Schwenkrichtung R₁ dar. Bei der in Fig. 1 dargestellten Ausführungsform ist der Schenkel 6 bezogen auf die Kolbenstange 44 entlang einer zweiten Schwenkrichtung R₂ frei schwenkbar. Mit anderen Worten überträgt die Kolbenstange 44 nur eine in der Figur nach rechts wirkende Kraft auf den Schenkel 6. In Fig. 1 ist die Geradeausfahrstellung des Schenkels 6 dargestellt, in welchem eine Radachse B des Schenkels 6 im Wesentlichen parallel zur Rohrachse A des Achsrohres 2 und der Betätigungseinheit 4 ausgerichtet ist. Ein um die Radachse B drehbar gelagertes Fahrzeugrad des Nutzfahrzeuges fährt in dieser Geradeausfahrstellung des Schenkels 6 vorzugsweise exakt geradeaus bezogen auf den Rahmen bzw. die Hauptfahrtrichtung des gesamten Nutzfahrzeuges. Bei der in Fig. 1 dargestellten Ausführungsform ist nicht dargestellt, dass an dem Schenkel 6 auch ein Eingriffsbereich für ein Übertragungselement 8 (nicht gezeigt) vorgesehen ist, welches insbesondere dann erforderlich ist, wenn die Kolbenstange 44 nur zur Übertragung einer Kraft in einer Richtung längs der Rohrachse A ausgelegt ist. Im Deckel des Zylinders 42 ist vorzugsweise ein Anschlussabschnitt 45 eingebracht, an welchen eine Fluidleitung 5 anschließbar und festlegbar ist, über welche ein unter Druck stehendes Fluid in den zweiten Kammerbereich 41B eingeleitet werden kann. Solange das Hydraulik- bzw. das Druckluftsystem des Nutzfahrzeuges fehlerfrei funktioniert, wird der zweite Kammerbereich 41B somit mit unter Druck stehendem Fluid versorgt, wodurch sich der Kolben 46 nach in der Figur links verschiebt und das in dem ersten Kammerbereich 41A angeordnete Rückstellmittel 11 unter Vorspannung setzt und die Kolbenstange 44 außer Eingriff mit dem Schenkel 6 bringt. Erst bei Ausfall des Druckluftsystems oder der Hydraulik des Nutzfahrzeuges sinkt der Druck im zweiten Kammerbereich 41B so weit ab, dass die Rückstellkraft des Rückstellmittels 11 den Fluiddruck im zweiten Kammerbereich 41B überwiegt und den Kolben 46 nach in der Figur rechts verlagert derart, dass die Kolbenstange 44 in Eingriff mit dem Schenkel 6 gelangen kann. Insbesondere bevorzugt ragt die Kolbenstange 44 in dem Zustand, in welchem sie die Geradeausfahrstellung des Schenkels 6 sichert, mit einer Blockierlänge L_{B} aus dem Zylinder 42 bzw. dem Deckel des Zylinders 42 heraus, wobei im vorliegenden Beispiel ein Anschlag an der Innenwand des Zylinders 42 vorgesehen ist, welcher verhindert, dass der Kolben 46 und die Kolbenstange 44 weiter nach in der Figur rechts verlagert werden. Erst nachdem wieder Hydraulik-Fluid über die Fluidleitung in den zweiten Kammerbereich 41B eingeleitet wird und der Kolben 46 gemeinsam mit der Kolbenstange 44 wieder nach in der Figur links verlagert wird, kann der Schenkel 6 wieder in der ersten Schwenkrichtung R₁ verlagert werden.

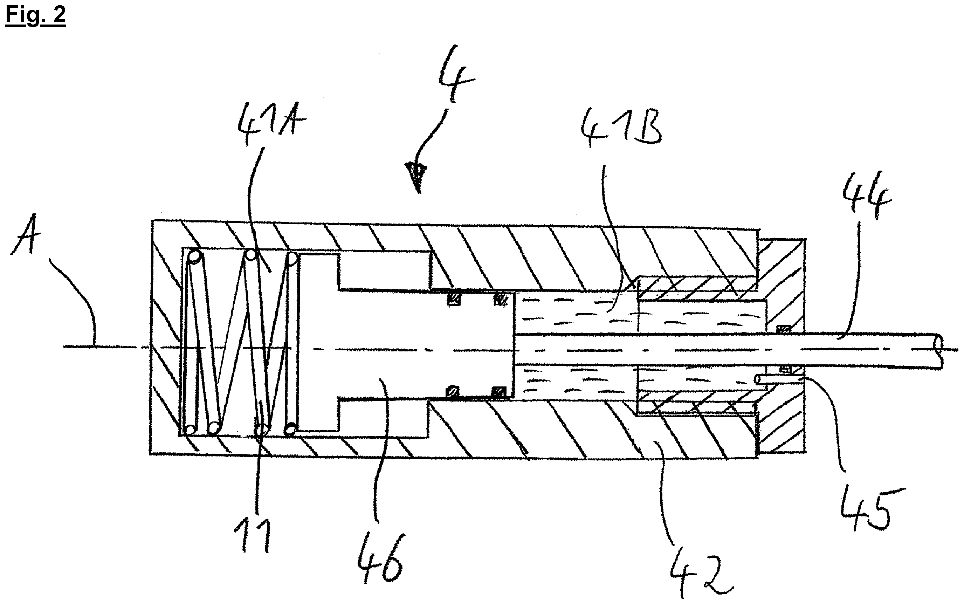

Fig.2 zeigt eine Ausführungsform der Betätigungseinheit 4, welche sich von der in Fig. 1 gezeigten Ausführungsform lediglich durch die spezielle Ausbildung der Innenwand des Zylinders 42 und des Kolbens 46 unterscheidet. Insbesondere bevorzugt ist die zum zweiten Kammerbereich 41B gewandte Fläche des Kolbens 46 kleiner ausgeführt, als die zum ersten Kammerbereich 41A gewandte Fläche. Auf diese Weise kann im ersten Kammerbereich 41A ein besonders starkes und somit großvolumiges Rückstellelement 11 angeordnet werden, welches eine ähnlich hohe Kraft wie das im zweiten Kammerbereich 41B zugeführte unter Druck stehende Fluid erzeugen kann. Die in Fig. 2 dargestellte Ausführungsform eignet sich somit insbesondere für eine gewisse Überdimensionierung der von dem Rückstellmittel 11 aufbringbaren Rückstellkraft gegenüber dem Druckluft- oder Hydrauliksystem des Nutzfahrzeuges, wodurch insbesondere das Rückstellmittel vorzugsweise nicht im Bereich seiner maximalen Kompression eingesetzt wird und dessen Lebensdauer somit höher ist.

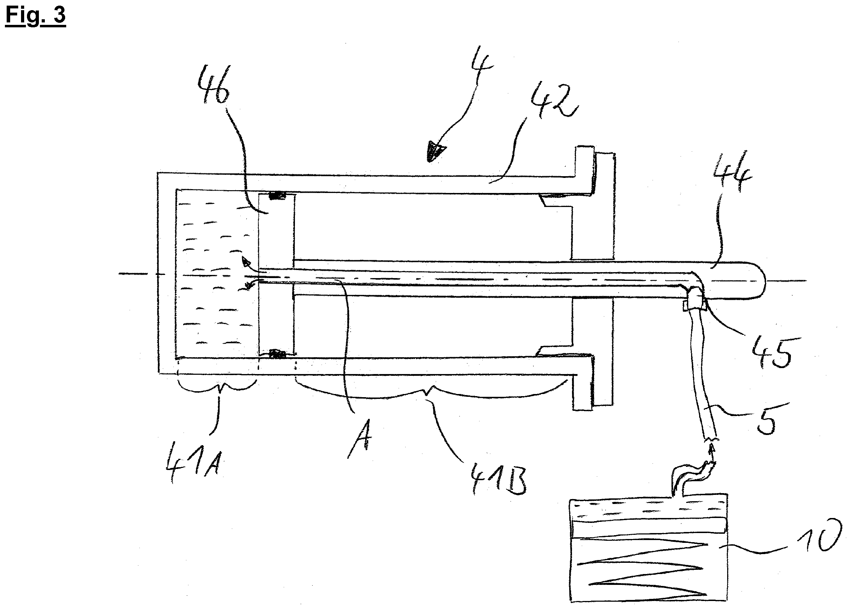

Bei der in Fig. 3 gezeigten alternativen Ausführungsform der Betätigungseinheit 4 wird anstelle des Rückstellelements 11 in dem ersten Kammerbereich 41A ein unter Druck stehendes Fluid in den ersten Kammerbereich 41A eingeleitet, welches den Kolben 46 und die Kolbenstange 44 in Richtung des Schenkels 6, 7 verlagert. Weiterhin ist vorzugsweise die Druckeinleitung des Fluides über eine Fluidleitung 5 und einen an, bzw. in der Kolbenstange 44 vorgesehenen Anschlussabschnitt 45 gewährleistet. Es ist auf diese Weise möglich, den ersten Kammerbereich 41A von außen, d. h. insbesondere bevorzugt von außerhalb des Achsrohres 2, insbesondere ohne eine Bohrung in das Achsrohr 2 oder in die Zylinderwand 42 einbringen zu müssen, mit Hydraulikfluid oder Druckluft zu versorgen. Für die Versorgung des ersten Kammerbereiches 41A mit unter Druck stehendem Fluid ist bei dieser Ausführungsform vorzugsweise ein Vorratsbehälter 10 vorgesehen, welcher die Möglichkeit gibt, auch bei Ausfall des Hydrauliksystems oder Druckluftsystems des Nutzfahrzeuges eine ausreichende Menge unter Druck stehenden Fluides mit einem ausreichenden Druck in den ersten Kammerbereich 41A zu leiten. Schematisch ist dabei im Vorratsbehälter 10 ein Rückstellmittel dargestellt, welches das unter Druck stehende Fluid in die Fluidleitung 5 presst.

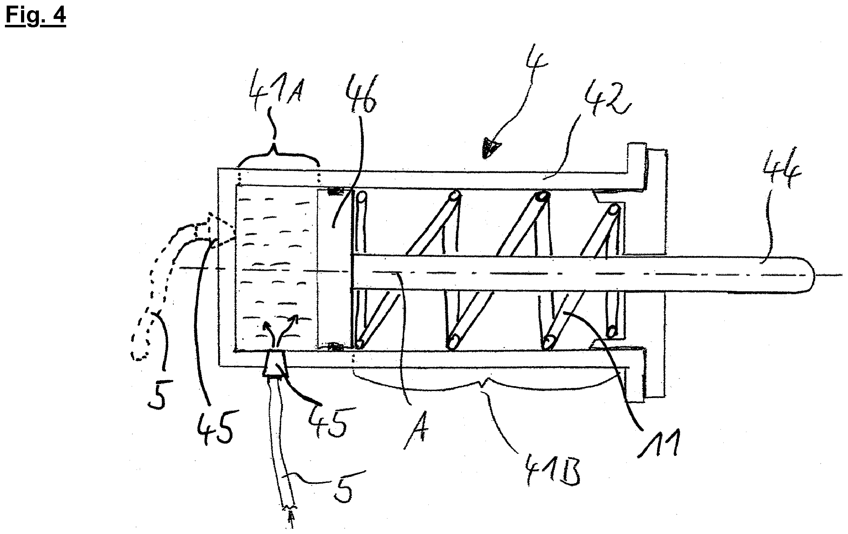

Fig. 4 zeigt eine alternative Ausführungsform der Betätigungseinheit 4, bei welcher, anders als bei der in Fig. 3 gezeigten Ausführungsform, die Fluidleitung 5 am Zylinder 42 angeschlossen ist. Dabei kann der Anschlussabschnitt 45 seitlich am Zylinder 42 angebracht sein, wobei in dieser Ausführungsvariante auch eine Bohrung im Achsrohr 2 erforderlich ist. Alternativ bevorzugt, kann der Anschlussabschnitt 45 auch an der zur Mitte des Achsrohres 2 hin gewandten Stirnfläche des Zylinders 42 angeordnet sein (gestrichelt dargestellt). Vorteilhaft hierbei ist, dass keine Bohrung im Achrohr 2, zumindest nicht im Aufnahmebereich der Betätigungseinheit 4, erforderlich ist. Weiterhin ist vorzugsweise ein Rückstellmittel 11 in Form einer Spiralfeder auf der dem Fluid gegenüberliegenden Seite des Kolbens 46 angeordnet, welches den Kolben 46 und die Kolbenstange 44 in eine Position verlagert, in der die Kolbenstange 44 die Schenkel 6, 7 nicht in Geradeausfahrstellung zu bringen strebt. Die erweist sich insbesondere während des fehlerfreien Betriebs der Achseinheit als vorteilig, da Schwenkbewegungen der Räder durchgeführt werden können, ohne dass die Betätigungseinheit 4 eingreift. Auch die Fluidleitung 5 in der in Fig. 4 dargestellten Ausführungsform kann mit einem Vorratsbehälter 10 verbunden sein.

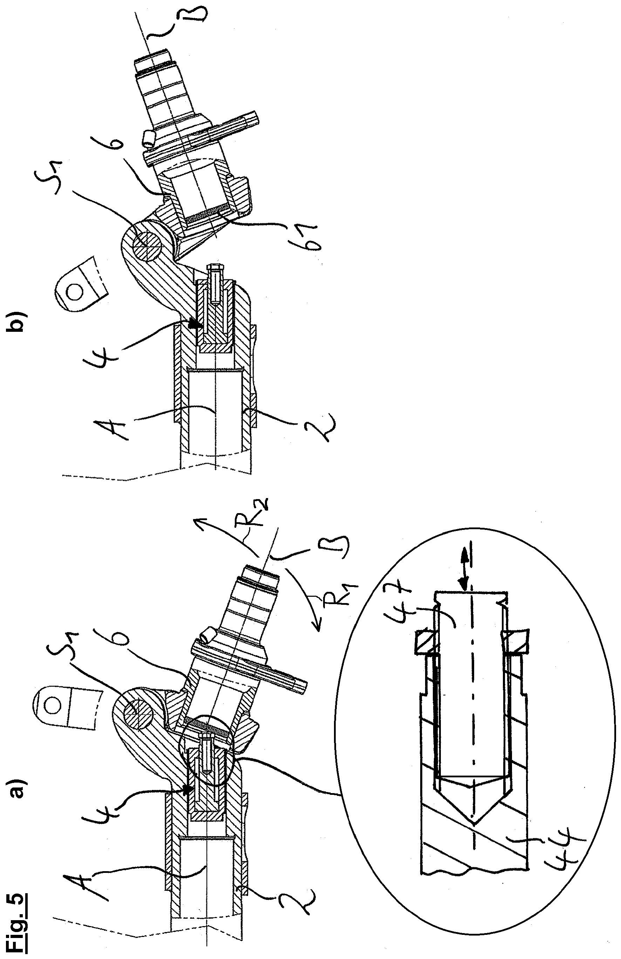

Fig. 5 zeigt verschiedene Schwenkpositionen des ersten Schenkels 6 relativ zum Achsrohr 2 und zur Rohrachse A. In der links gezeigten Darstellung Fig.5 a) ist der Schenkel 6 maximal in der ersten Richtung R₁ verschwenkt (siehe hierzu auch Fig. 1). Die Betätigungseinheit 4 ist ausgelegt, den Schenkel 6 an dessen Einleitungsfläche 61 derart abzustützen, dass eine Kollision des Schenkels 6 mit dem Achsrohr 2 oder anderen Fahrwerkskomponenten vermieden wird. In der vergrößerten Ansicht zu Fig. 5 a) ist ein bevorzugt in der Kolbenstange 44 vorgesehenes Justierelement 47 dargestellt. Das Justierelement 47 ist vorzugsweise als Schraubbolzen ausgebildet und kann in der eingestellten Stellung längs der Rohrachse A mit einer Kontermutter festgelegt werden. Über das Justierelement 47 lässt sich somit die Länge der Kolbenstange 44 verändern, wodurch bei gleicher Position des Kolbens 46 dem Schenkel 6 ein kleinerer oder ein größerer Schwenkwinkel in der ersten Schwenkrichtung R₁ gegeben wird, bevor die Einleitungsfläche 61 an dem Justierelement 47 der Kolbenstange 44 anschlägt. Mit anderen Worten dient das Justierelement 47 dazu, den maximalen Lenkausschlag des Schenkels 6 in der ersten Schwenkrichtung R₁ zu begrenzen. Fig. 5 b) zeigt, dass der Schenkel 6 bei einer Schwenkbewegung in der zweiten Schwenkrichtung R₂ nicht durch das Kolbenelement 44 abgestützt ist.

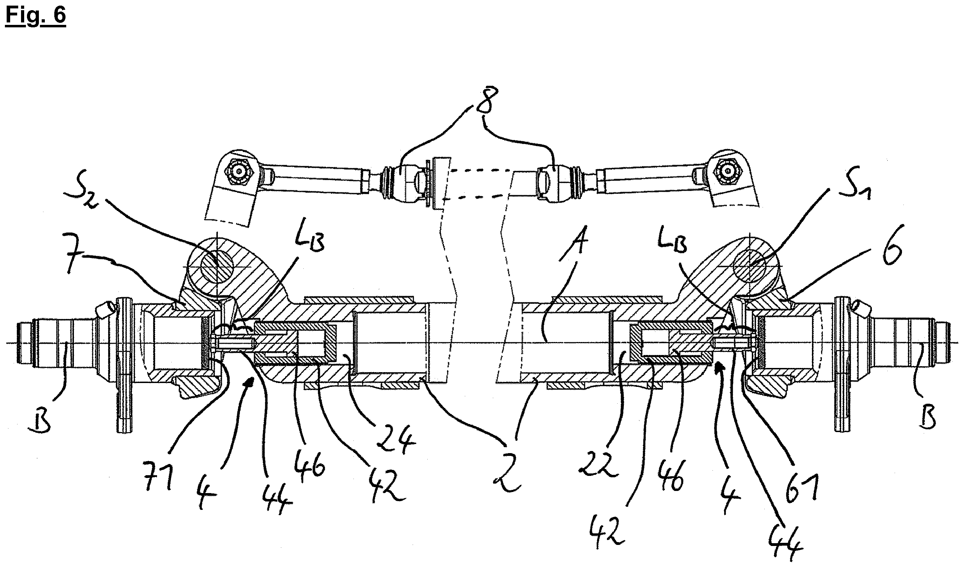

Fig. 6 zeigt eine Achseinheit mit zwei Schenkeln 6, 7 in der Art des in den vorhergehenden Figuren gezeigten Schenkels 6 und zweit spiegelsymmetrisch zueinander am Achsrohr 2 angeordneten Betätigungseinheiten. Dabei ist in Fig. 6 die Stellung der Kolben 46 und der Kolbenstangen 44 relativ zu den Zylindern 42 gezeigt, in denen die Kolbenstangen 44 in die jeweilige Einleitungsfläche 61, 71 eingreifen um die Schenkel 6, 7 in Geradeausfahrstellung zu bringen oder zu halten. Die Kolbenstangen 44 ragen also mit ihrer Blockierlänge L_{B} aus den Zylindern 42 heraus. Mit beiden Schenkeln 6, 7 verbunden ist ein Stützelement 8, welches die Schwenkbewegung des einen Schenkels 6, 7 auf den jeweils anderen Schenkel 6, 7 überträgt. Vorzugsweise sind in der Geradeausfahrstellung der Schenkel 6, 7 die Radachsen B parallel zur Rohrachse A.

### Bezugszeichenliste:

| | |
|---|---|
| 2 | - Achsrohr |
| 4 | - Betätigungseinheit |
| 5 | - Fluidleitung |
| 6 | - (erster) Schenkel |
| 7 | - zweiter Schenkel |
| 8 | - Übertragungselement |
| 10 | - Vorratsbehälter |
| 11 | - Rückstellmittel |
| 22 | - (erste) Aufnahmeöffnung |
| 24 | - zweite Aufnahmeöffnung |
| 41 | - Kammer |
| 41A | - erster Kammerbereich |
| 41B | - zweiter Kammerbereich |
| 42 | - Zylinder |
| 44 | - Kolbenstange |
| 45 | - Anschlussabschnitt |
| 46 | - Kolben |
| 47 | - Justierelement |
| 61 | - (erste) Einleitungsfläche |
| 71 | - zweite Einleitungsfläche |
| A | - Rohrachse |
| B | - Radachse |
| L_{B} | - Blockierlänge |
| R₁/R₂ | - erste/zweite Schwenkrichtung |
| S | - Schwenkachse |
| S₁/S₂ | - erste/zweite Schwenkachse |

## Patentansprüche

1. Achseinheit, insbesondere zum Einsatz in Nutzfahrzeugen mit einem Hydraulik- oder Druckluftsystem, umfassend ein Achsrohr (2) und eine Betätigungseinheit (4),
wobei das Achsrohr (2) eine Aufnahmeöffnung (22) aufweist, **dadurch gekennzeichnet, dass**
die Betätigungseinheit (4) einen Zylinder (42), eine Kolbenstange (44) und einen Kolben (46) aufweist,
wobei der Kolben (46) eine Kammer (41) der Betätigungseinheit (4) in einen ersten Kammerbereich (41A) und einen zweiten Kammerbereich (41B) teilt, wobei die Kolbenstange (44) mit dem Kolben in Eingriff steht und derart ausgelegt ist, dass sie mit einem Schenkel (6) der Achseinheit in Eingriff bringbar ist, um eine Kraft auf den Schenkel (6) zu übertragen,
wobei die Betätigungseinheit (4) in der Aufnahmeöffnung (22) des Achsrohrs (2) angeordnet und gegen Verlagerung quer zu einer Rohrachse (A) und zumindest in einer Richtung parallel zur oder längs der Rohrachse (A) gesichert ist.

2. Achseinheit nach Anspruch 1,
wobei die Betätigungseinheit (4) einen Anschlussabschnitt (45) zum Anschluss einer Fluidleitung (5) aufweist,
wobei im Betrieb der Betätigungseinheit (4) ein unter Druck stehendes Fluid in einen der Kammerbereiche (41A, 41B) einleitbar ist.

3. Achseinheit nach einem der vorhergehenden Ansprüche,
wobei der Schenkel (6) schwenkbar um eine Schwenkachse (S) am Achsrohr (2) gelagert ist,
wobei die Schwenkachse (S) von der Rohrachse (A) beabstandet ist und quer zur Rohrachse (A) steht,
wobei der Schenkel (6) in einer ersten Schwenkrichtung (R₁) auf die Kolbenstange (44) zu schwenkbar ist und in einer zweiten Schwenkrichtung (R₂) von der Kolbenstange (44) weg schwenkbar ist,
wobei die Kolbenstange (44) ausgelegt ist, zumindest in der ersten Schwenkrichtung (R₁) einen Anschlag für den Schenkel (6) zu bilden.

4. Achseinheit nach einem der vorhergehenden Ansprüche,
wobei der Schenkel (6) eine Radachse (B) aufweist, um welche drehbar ein Rad des Nutzfahrzeuges an dem Schenkel festlegbar ist,
wobei in einer Geradeausfahrstellung des Schenkels (6) die Radachse (B) parallel zur Rohrachse (A) ist.

5. Achseinheit nach einem der vorhergehenden Ansprüche,
wobei am Achsrohr (2), dem ersten Schenkel (6) gegenüberliegend, ein zweiter Schenkel (7) schwenkbar um eine zweite Schwenkachse (S₂) festgelegt ist,
wobei der erste Schenkel (6) und der zweite Schenkel (7) durch ein Übertragungselement (8) miteinander verbunden sind,
wobei das Übertragungselement (8) eine Schwenkbewegung des ersten oder des zweiten Schenkels (6,7) an den jeweils anderen Schenkel (6,7) überträgt.

6. Achseinheit nach Anspruch 5,
wobei eine zweite Betätigungseinheit (4) in einer zweiten Aufnahmeöffnung (24) des Achsrohres (2) festlegbar ist,
wobei die zweite Betätigungseinheit (4) ausgelegt ist, den zweiten Schenkel (7) mit einer Kraft längs der Rohrachse (A) zu beaufschlagen, welche entgegengesetzt zur Kraft mit der die erste Betätigungseinheit (4) den ersten Schenkel (6) beaufschlagt ist.

7. Achseinheit nach Anspruch 4 und 6,
wobei in einem Fehlerzustand oder bei Rückwärtsfahrt des Nutzfahrzeuges die Kolbenstangen (44) der Betätigungseinheiten (4) mit einer Blockierlänge (L_{B}) aus den Zylindern (42) herausragen,
wobei die Schenkel (6,7) durch die Kolbenstangen (44) und das Übertragungselement (8) in der Geradeausfahrstellung gehalten sind.

8. Achseinheit nach Anspruch 6 oder 7,
wobei die Blockierlänge (L_{B}) die maximal ausgefahrene Länge der Kolbenstange (44) ist.

9. Achseinheit nach einem der vorhergehenden Ansprüche,
wobei der erste Kammerbereich (41A) auf der der Kolbenstange (44) abgewandten Seite des Kolbens (46) angeordnet ist,
wobei ein Einleiten von unter Druck stehendem Fluid in den ersten Kammerbereich (41A) eine Verlagerung des Kolbens (46) und der Kolbenstange (44) entlang der Rohrachse (A) bewirkt, derart dass die Kolbenstange (44) in Eingriff mit dem Schenkel (6) gelangt und eine Stellkraft auf den Schenkel überträgt.

10. Achseinheit nach Anspruch 9,
wobei das unter Druck stehende Fluid in einem Vorratsbehälter (10) bevorratet ist, welcher auch bei Ausfall des Hydraulik- oder Druckluftsystems des Nutzfahrzeuges ausreichend Fluid und Druck bereitstellt um die Kolbenstange(n) (44) der Betätigungseinheit(en) (4) derart zu verschieben, dass sie mit einer Blockierlänge (L_{B}) aus dem/den Zylinder(n) (42) herausragt/herausragen.

11. Achseinheit nach einem der Ansprüche 1 - 8,
wobei der erste Kammerbereich (41A) auf der der Kolbenstange (44) abgewandten Seite des Kolbens (46) angeordnet ist,
wobei ein Rückstellmittel (11) im ersten Kammerbereich (41A) angeordnet und von dem Kolben (46) unter Vorspannung gehalten ist,
wobei in einem Normalbetrieb der Betätigungseinheit (4) das Hydraulik- oder Druckluftsystem des Nutzfahrzeuges unter Druck stehendes Fluid im zweiten Kammerbereich (41B) bereitstellt, welches den Kolben (46) gegen das Rückstellmittel (11) zwingt,
wobei bei Druckabfall in dem zweiten Kammerbereich (41B) das Rückstellmittel (11) den Kolben (46) mit der Kolbenstange (44) gegen den Schenkel (6) presst.

12. Achseinheit nach Anspruch 11,
wobei das Rückstellmittel (11) ein metallisches Federelement umfasst.

13. Achseinheit nach einem der vorhergehenden Ansprüche,
wobei die Kolbenstange (44) an dem Schenkel (6,7) derart festgelegt ist, dass sie eine Kraft längs der Rohrachse (A) in beiden Richtungen auf den Schenkel (6,7) übertragen.

14. Achseinheit nach einem der vorhergehenden Ansprüche,
wobei der Schenkel (6,7) eine Einleitungsfläche (61,71) aufweist, welche derart geformt ist, dass bei Krafteinleitung durch die Kolbenstange (44) im Wesentlichen keine Kraftkomponenten quer zur Rohrachse (A) auftreten.

15. Achseinheit nach einem der vorhergehenden Ansprüche,
wobei die Erstreckung der Kolbenstange (44) längs der Rohrachse (A) einstellbar ist,
wobei die Kolbenstange (44) im vollständig in den Zylinder (42) eingefahrenen Zustand eine Lenkausschlagbegrenzung für den Schenkel (6,7) bildet.

## Claims

1. An axle unit, in particular for use in utility vehicles with a hydraulic or compressed air system, comprising an axle tube (2) and an actuation unit (4), wherein the axle tube (2) has a receiving opening (22),
**characterized in that** the actuation unit (4) has a cylinder (42), a piston rod (44) and a piston (46),
wherein the piston (46) divides a chamber (41) of the actuation unit (4) into a first chamber region (41A) and a second chamber region (41B),
wherein the piston rod (44) is in engagement with the piston and is designed such that it can be brought into engagement with a leg (6) of the axle unit in order to transmit a force to the leg (6),
wherein the actuation unit (4) is arranged in the receiving opening (22) of the axle tube (2) and is secured against moving transversely relative to a tube axis (A) and at least in one direction parallel to or along the tube axis (A).

2. The axle unit as claimed in claim 1,
wherein the actuation unit (4) has a connecting portion (45) for connection of a fluid line (5),
wherein in operation of the actuation unit (4), a pressurized fluid can be introduced into one of the chamber regions (41A, 41B).

3. The axle unit as claimed in one of the preceding claims,
wherein the leg (6) is mounted on the axle tube (2) so as to be pivotable about a pivot axis (S),
wherein the pivot axis (S) is spaced from the tube axis (A) and stands transversely to the tube axis (A),
wherein the leg (6) is pivotable in a first pivot direction (R₁) towards the piston rod (44) and in a second pivot direction (R₂) away from the piston rod (44), wherein the piston rod (44) is configured to form a stop for the leg (6) at least in the first pivot direction (R₁).

4. The axle unit as claimed in any of the preceding claims,
wherein the leg (6) has a wheel axis (B), wherein a wheel of the utility vehicle can be mounted on the leg so as to be rotatable about said axis,
wherein when the leg (6) is in the straight-ahead position, the wheel axis (B) is parallel to the tube axis (A).

5. The axle unit as claimed in any of the preceding claims,
wherein a second leg (7) is mounted on the axle tube (2) opposite the first leg (6) and pivotably about a second pivot axis (S₂),
wherein the first leg (6) and the second leg (7) are connected together by a transmission element (8),
wherein the transmission element (8) transmits a pivot movement of the first or second leg (6, 7) to the respective other leg (6, 7).

6. The axle unit as claimed in claim 5,
wherein a second actuation unit (4) can be mounted in a second receiving opening (24) of the axle tube (2),
wherein the second actuation unit (4) is configured to apply a force to the second leg (7) along the tube axis (A) in the opposite direction to the force which is applied to the first leg (6) by the first actuation unit (4).

7. The axle unit as claimed in claim 4 und 6,
wherein in a fault state or on reversing of the utility vehicle, the piston rods (44) of the actuation units (4) protrude from the cylinders (42) of the actuation units with a blocking length (L_{B}),
wherein the legs (6, 7) are held in the straight-ahead position by the piston rods (44) and the transmission element (8).

8. The axle unit as claimed in claim 6 or 7,
wherein the blocking length (L_{B}) is the maximally extended length of the piston rod (44).

9. The axle unit as claimed in any of the preceding claims,
wherein the first chamber region (41A) is arranged on the side of the piston (46) facing away from the piston rod (44),
wherein the introduction of pressurized fluid into the first chamber region (41A) causes a movement of the piston (46) and the piston rod (44) along the tube axis (A) such that the piston rod (44) comes into engagement with the leg (6) and transmits an actuating force to the leg.

10. The axle unit as claimed in claim 9,
wherein the pressurized fluid is stored in the storage tank (10) which, even on failure of the hydraulic or compressed air system of the utility vehicle, provides sufficient fluid and pressure to move the piston rod(s) (44) of the actuation unit(s) (4) such that it/they protrude(s) out of the cylinder(s) (42) with a blocking length (L_{B}).

11. The axle unit as claimed in any of claims 1 - 8,
wherein the first chamber region (41A) is arranged on the side of the piston (46) facing away from the piston rod (44),
wherein a return means (11) is arranged in the first chamber region (41A) and held under pretension by the piston (46),
wherein in normal operation of the actuation unit (4), the hydraulic or compressed air system of the utility vehicle provides pressurized fluid in the second chamber region (41B), forcing the piston (46) against the return means (11),
wherein on a pressure fall in the second chamber region (41B), the return means (11) presses the piston (46) with the piston rod (44) against the leg (6).

12. The axle unit as claimed in claim 11,
wherein the return means (11) comprises a metal spring element.

13. The axle unit as claimed in any of the preceding claims,
wherein the piston rod (44) is mounted on the leg (6, 7) such that it transmits a force to the leg (6, 7) in both directions along the tube axis (A).

14. The axle unit as claimed in any of the preceding claims,
wherein the leg (6, 7) has an application face (61, 71) which is formed such that on application of a force by the piston rod (44), substantially no force components occur transversely to the tube axis (A).

15. The axle unit as claimed in any of the preceding claims,
wherein the extension of the piston rod (44) along the tube axis (A) can be adjusted,
wherein in the state fully retracted into the cylinder (42), the piston rod (44) forms a steering deflection limit for the leg (6, 7).

## Revendications

1. Ensemble d'essieu, destiné en particulier à l'utilisation dans des véhicules utilitaires à système hydraulique ou pneumatique, comportant un tube d'essieu (2) et une unité d'actionnement (4),
le tube d'essieu (2) présentant une ouverture de réception (22), **caractérisé en ce que**
l'unité d'actionnement (4) comprend un cylindre (42), une tige de piston (44) et un piston (46),
le piston (46) subdivise une chambre (41) de l'unité d'actionnement (4) en une première zone de chambre (41A) et en une seconde zone de chambre (41B),
la tige de piston (44) est en engagement avec le piston et est conçue de manière à pouvoir être mise en engagement avec une fusée (6) de l'ensemble d'essieu pour transmettre une force à la fusée (6),
l'unité d'actionnement (4) est agencée dans l'ouverture de réception (22) du tube d'essieu (2) et est bloquée à l'encontre d'un déplacement transversalement à un axe de tube (A) et au moins dans une direction parallèle à ou le long de l'axe de tube (A).

2. Ensemble d'essieu selon la revendication 1,
dans lequel
l'unité d'actionnement (4) comprend une portion de raccordement (45) pour le raccordement d'une conduite de fluide (5),
pendant le fonctionnement de l'unité d'actionnement (4), un fluide sous pression peut être introduit dans l'une des zones de chambre (41A, 41B).

3. Ensemble d'essieu selon l'une des revendications précédentes,
dans lequel
la fusée (6) est montée mobile en basculement autour d'un axe de basculement (S) sur le tube d'essieu (2),
l'axe de basculement (S) est écarté de l'axe de tube (A) et se situe transversalement à l'axe de tube (A),
la fusée (6) peut basculer vers la tige de piston (44) dans une première direction de basculement (R₁) et peut basculer en éloignement de la tige de piston (44) dans une seconde direction de basculement (R₂),
la tige de piston (44) est conçue pour former une butée pour la fusée (6) au moins dans la première direction de basculement (R₁).

4. Ensemble d'essieu selon l'une des revendications précédentes,
dans lequel
la fusée (6) comprend un essieu de roue (B) autour duquel une roue du véhicule utilitaire peut être fixée mobile en rotation sur la fusée,
dans une position de circulation en ligne droite de la fusée (6), l'essieu de roue (B) est parallèle à l'axe de tube (A).

5. Ensemble d'essieu selon l'une des revendications précédentes,
dans lequel
une seconde fusée (7) peut être fixée mobile en basculement autour d'un second axe de basculement (S₂) sur le tube d'essieu (2), à l'opposé de la première fusée (6),
la première fusée (6) et la seconde fusée (7) sont reliées l'une à l'autre par un élément de transmission (8),
l'élément de transmission (8) transmet un mouvement de basculement de la première ou de la seconde fusée (6, 7) à l'autre fusée respective (6, 7).

6. Ensemble d'essieu selon la revendication 5,
dans lequel
une seconde unité d'actionnement (4) peut être fixée dans une seconde ouverture de réception (24) du tube d'essieu (2),
la seconde unité d'actionnement (4) est conçue pour solliciter la seconde fusée (7) par une force le long de l'axe de tube (A), qui est opposée à la force par laquelle la première unité d'actionnement (4) sollicite la première fusée (6).

7. Ensemble d'essieu selon la revendication 4 et 6,
dans lequel
dans un état d'erreur ou lors d'une circulation en marche arrière du véhicule utilitaire, les tiges de piston (44) des unités d'actionnement (4) dépassent par une longueur de blocage (L_{B}) hors des cylindres (42),
les fusées (6, 7) sont maintenues en position de circulation en ligne droite par les tiges de piston (44) et par l'élément de transmission (8).

8. Ensemble d'essieu selon la revendication 6 ou 7,
dans lequel
la longueur de blocage (L_{B}) est la longueur déployée au maximum de la tige de piston (44).

9. Ensemble d'essieu selon l'une des revendications précédentes,
dans lequel
la première zone de chambre (41A) est agencée sur le côté du piston (46) détourné de la tige de piston (44),
une introduction de fluide sous pression dans la première zone de chambre (41A) provoque un déplacement du piston (46) et de la tige de piston (44) le long de l'axe de tube (A), de telle sorte que la tige de piston (44) vient en engagement avec la fusée (6) et transmet une force de réglage à la fusée.

10. Ensemble d'essieu selon la revendication 9,
dans lequel
le fluide sous pression est stocké dans un réservoir (10) qui, même en cas de défaillance du système hydraulique ou pneumatique du véhicule utilitaire, fournit suffisamment de fluide et de pression pour translater la ou les tiges de piston (44) de la ou des unités d'actionnement (4) de telle sorte qu'elle(s) dépasse(nt) par une longueur de blocage (L_{B}) hors du ou des cylindres (42).

11. Ensemble d'essieu selon l'une des revendications 1 à 8,
dans lequel
la première zone de chambre (41A) est agencée sur le côté du piston (46) détourné de la tige de piston (44),
un moyen de rappel (11) est agencé dans la première zone de chambre (41A) et est maintenu sous précontrainte par le piston (46),
lors d'un fonctionnement normal de l'unité d'actionnement (4), le système hydraulique ou pneumatique du véhicule utilitaire fournit un fluide sous pression dans la seconde zone de chambre (41B) qui force le piston (46) à l'encontre du moyen de rappel (11),
lors d'une chute de pression dans la seconde zone de chambre (41B), le moyen de rappel (11) pousse le piston (46) avec la tige de piston (44) contre la fusée (6).

12. Ensemble d'essieu selon la revendication 11,
dans lequel
le moyen de rappel (11) comprend un élément élastique métallique.

13. Ensemble d'essieu selon l'une des revendications précédentes,
dans lequel
la tige de piston (44) est fixée sur la fusée (6, 7) de manière à transmettre une force à la fusée (6, 7) le long de l'axe de tube (A) dans les deux directions.

14. Ensemble d'essieu selon l'une des revendications précédentes,
dans lequel
la fusée (6, 7) présente une surface d'application (61, 71) formée de telle sorte que lors de l'application d'une force par la tige de piston (44), il n'y a sensiblement pas de composante de force qui apparaisse transversalement à l'axe de tube (A).

15. Ensemble d'essieu selon l'une des revendications précédentes,
dans lequel
l'extension de la tige de piston (44) le long de l'axe de tube (A) est réglable,
dans l'état complètement rétracté dans le cylindre (42), la tige de piston (44) forme une limitation de braquage pour la fusée (6, 7).
